# EUROPÄISCHE PATENTSCHRIFT

(11) **EP 2 028 044 B1**
(45) Veröffentlichungstag und Bekanntmachung des Hinweises auf die Patenterteilung: **07.12.2011**
(21) Anmeldenummer: 08014760.6
(22) Anmeldetag: 20.08.2008
(51) Int. Cl.: B60P 7/08

(54) **Ladungssicherungsvorrichtung**
Load securing device
Dispositif de sécurisation de chargement

(30) Priorität: 20.08.2007 DE 102007039319
(43) Veröffentlichungstag der Anmeldung: 25.02.2009
(73) Patentinhaber: Fahrzeugbau Karl Tang GmbH, 40721 Hilden (DE)
(72) Erfinder: Böckmann, Udo, 42653 Solingen (DE)
(74) Vertreter: Behrendt, Arne

(56) Entgegenhaltungen:
- DE-C1- 19 904 366
- US-A- 5 141 277

## Beschreibung

Die Erfindung betrifft eine Vorrichtung zur Sicherung von Ladung auf der Ladefläche eines Transportmittels, mit einem Grundkörper, der eine Rungentasche zur Aufnahme einer Einsteckrunge bildet, und mit einem Zurrelement zum Verzurren der Ladung mittels eines Seils, eines Gurtes, eines elastischen Bandes oder dergleichen.

Aus dem Stande der Technik sind Transportmittel, wie zum Beispiel LKWs, die zum Befördern von Fracht verwendet werden, in den verschiedensten Ausgestaltungen bekannt. Die Ladefläche eines solchen Transportmittels sollte eine Ausgestaltung aufweisen, die den Transport verschiedenster Arten von Frachtgütern ermöglicht. Häufig werden genormte Frachteinheiten, zum Beispiel Paletten, transportiert. Ebenso werden ungenormte Güter, wie zum Beispiel Pakete oder Säcke transportiert. Bei LKWs werden hohe Anforderungen an die Ladungssicherung gestellt, um die Gefährdung von anderen Verkehrsteilnehmern durch von der Ladefläche herab fallende Fracht zu minimieren. In Anbetracht der Verschiedenartigkeit der zu transportierenden Frachtgüter müssen Ladungssicherungssysteme variabel und flexibel einsetzbar sein, um unabhängig vom Frachtgut stets eine zuverlässige Sicherung zu gewährleisten.

Es wird grundsätzlich zwischen zwei unterschiedlichen Arten der Ladungssicherung unterschieden. Bei der formschlüssigen Ladungssicherung werden Einsteckrungen verwendet, die in Rungentaschen in dem Bodenaufbau der Ladefläche gesteckt werden, um Bereiche für das zu transportierende Gut abzugrenzen. Die Einsteckrungen bewirken einen Formschluss, so dass ein Verrutschen des zu sichernden Frachtgutes verhindert wird. Alternativ kommen kraftschlüssige Ladungssicherungssysteme zum Einsatz. Bei diesen wird mittels Gurten das zu sichernde Frachtgut gegen die Ladefläche verspannt. Die Gurte werden in Zurrösen, die mit der Ladefläche fest verbunden sind, eingehängt.

Ein flexibel einsetzbares Ladungssicherungssystem sollte sowohl eine formschlüssige Ladungssicherung mittels Einsteckrungen als auch eine kraftschlüssige Ladungssicherung durch Verzurren bieten. Möglichst ohne Umrüstzeit sollte eine Anpassung an die jeweilige Transportaufgabe erfolgen können.

Eine Ladungssicherungsvorrichtung der eingangs angegebenen Art ist beispielsweise aus der US 5.141,277 vorbekannt. Die bekannte Vorrichtung besteht aus einem Einsatz für eine Rungentasche, die am Rand der Ladefläche eines Transportmittels angeordnet ist. Der Einsatz umfasst seinerseits eine Rungentasche für eine Einsteckrunge kleineren Durchmessers sowie eine Zurröse, die an dem Einsatz mittels einer Schraubverbindung fixiert ist. Die bekannte Vorrichtung hat den Nachteil, dass diese ausschließlich am Rand der Ladefläche einsetzbar ist. Auf der Ladefläche würde die starr an dem Einsatz angeordnete Zurröse die Beladung mit Frachtgütern behindern. Ein weiterer Nachteil ist, dass nur relativ kleine Einsteckrungen in den Einsatz einsteckbar sind, was die Einsetzbarkelt für schwere Frachtgüter einschränkt.

Vor diesem Hintergrund ist es Aufgabe der Erfindung, eine flexible Ladungssicherungsvorrichtung bereitzustellen. Die Vorrichtung soll einfach aufgebaut und kostengünstig herstellbar sein.

Diese Aufgabe löst die Erfindung dadurch, dass das Zurrelement an dem Grundkörper um eine Schwenkachse drehbar gelagert ist.

Ein wesentlicher Vorteil der Erfindung ist, dass mit der Ladungssicherungsvorrichtung in einfacher und zuverlässiger Weise eine Anpassung an die jeweilige Transportaufgabe erfolgen kann. Die Ladungssicherungsvorrichtung kann an jeder beliebigen Stelle auf der Ladefläche angeordnet werden. Das Zurrelement stört beim Beladen der Ladefläche mit Frachtgütern nicht, da es jederzeit weggeschwenkt werden kann. Wenn kein Frachtgut verzurrt wird, kann
- bei entsprechend weggeschwenktem Zurrelement - eine Einsteckrunge in die Rungentasche zur formschlüssigen Ladungssicherung gesteckt werden.

Die erfindungsgemäße Ladungssicherungsvorrichtung hat einen einfachen mechanischen Aufbau, was sich vorteilhaft auf die Herstellungskosten auswirkt.

Praktischerweise ist das Zurrelement der erfindungsgemäßen Vorrichtung als Zurröse ausgebildet. Eine ringförmige Zurröse eignet sich gut, um ein Seil, einen Gurt, oder ein elastisches Band mittels geeigneter Haken zur kraftschlüssigen Ladungssicherung einzuhängen.

Gemäß einer bevorzugten Weiterbildung der Erfindung ist das Zurrelement bei Nichtnutzung in eine im Wesentlichen horizontal ausgerichtete Stellung wegschwenkbar, in der es eine Führung für die Einsteckrunge bildet. Bei dieser Ausgestaltung hat das Zurrelement eine Doppelfunktion. Zum einen dient es zum Vorzurren von Frachtgut. Wenn es hierzu nicht genutzt wird, bildet es eine Führung für die Einsteckrunge und ist somit integraler Bestandteil der Rungentasche. Dadurch ist gleichzeitig eine hohe Stabilität bei der Aufnahme einer Einsteckrunge gewährleistet, da das Zurrelement die Einsteckrunge zusätzlich abstützt.

Sinnvollerweise fluchtet das Zurrelement in der weggeschwenkten Stellung mit der Ladefläche des Transportmittels im Wesentlichen. Das mit der Ladefläche fluchtende Zurrelement behindert das Beladen der Ladefläche mit Frachtgut nicht, In der weggeschwenkten Stellung bildet das Zurrelement gleichsam einen Bestandteil der Ladefläche. Auf einer mit einer erfindungsgemäßen Ladungssicherungsvorrichtung ausgestatteten Ladefläche kann eine Beladung ohne jegliche Beeinträchtigung erfolgen. Zur Beladung verwendete Hilfsmittel, wie zum Beispiel Hubwagen, können problemlos verwendet werden. Mit dem Rad eine Hubwagens kann auch direkt über die Ladungssicherungsvorrichtung gefahren werden, ohne dass das Rad darin hängen bleibt.

Besonders vorteilhaft ist eine Ausgestaltung der erfindungsgemäßen Ladungssicherungsvorrichtung, bei der in den Grundkörper von oben eine Abdeckscheibe zusätzlich einsetzbar ist, die eine Öffnung für die Einsteckrunge aufweist, wobei die Abdeckscheibe das Zurrelement in der weggeschwenkten Stellung fixiert. Durch die Abdeckscheibe ist das Zurrelement festgelegt, so dass es nicht versehentlich verschwenkt werden kann, beispielsweise wenn mit einem Hubwagen über die Vorrichtung gefahren wird. Aufgrund der Öffnung für die Einsteckrunge behindert die Abdeckscheibe die Verwendung der Vorrichtung zur Ladungssicherung mittels einer Einsteckrunge nicht.

Zweckmäßigerweise ist an dem Grundkörper der Ladungssicherungsvorrichtung ein Befestigungsmittel zur Befestigung an einem Fußbodenaufbau des Transportmittels angeordnet. Die erfindungsgemäße Vorrichtung kann mit Vorteil am Aufbau des Transportmittels an nahezu beliebigen Stellen befestigt werden. Die Ladefläche eines Transportmittels kann mit einer Vielzahl von erfindungsgemäßen Ladungssicherungsvorrichtungen ausgestattet sein, um eine besonders flexible und zuverlässige Sicherung von Frachtgütern auf der Ladefläche zu ermöglichen.

Das Befestigungsmittel kann zum Beispiel Löcher zum Verschrauben des Grundkörpers mit dem Fußbodenaufbau des Transportmittels aufweisen, wobei das Befestigungsmittel die Befestigung des Grundkörpers an dem Fußbodenaufbau, der ein dazu korrespondierendes Lochmuster aufweist, an verschiedenen Stellen ermöglicht. Der Aufbau des Ladungssicherungssystems der Ladefläche kann bei dieser Ausgestaltung beliebig verändert und angepasst werden, und zwar mit sehr geringem Zeit- und Kostenaufwand.

Ein besonders praktischer Einsatz der erfindungsgemäßen Vorrichtung ergibt sich durch einen Fußbodenaufbau der Ladefläche des Transportmittels, der eine Mehrzahl von Öffnungen zur Aufnahme des Grundkörpers aufweist. Die Ladefläche eines LKWs wird häufig durch Holzplatten gebildet, die auf dem Aufbau des LKWs befestigt sind. Die erfindungsgemäße Ladungssicherungsvorrichtung wird zweckmäßigerweise direkt mit dem Aufbau des LKWs verschraubt, wie oben erläutert, um eine ausreichende Stabilität bei der Ladungssicherung zu gewährleisten. Die Ladungssicherungsvorrichtung ist durch entsprechende Öffnungen im Fußbodenaufbau zugänglich. Diese Öffnungen können beispielsweise durch Kombohrungen in den Holzplatten des Fußbodenaufbaus angebracht werden.

Gemäß einer bevorzugten Ausgestaltung weist der Grundkörper der Ladungssicherungsvorrichtung einen röhrenförmigen unteren Abschnitt auf, dessen Innendurchmesser im Wesentlichem dem Außendurchmesser der Einsteckrunge entspricht. Außerdem weist der Grundkörper einen gegenüber dem unteren Abschnitt erweiterten oberen Abschnitt auf, in dem der Grundkörper das Zurrelement aufnimmt, So ergibt sich ein kompakter Aufbau, bei dem das Zurrelement in dem Grundkörper geschützt aufgenommen ist. Wenn, wie oben erläutert, das weggeschwenkte Zurrelement eine Führung für die Einsteckrunge bildet, kann bei diesem Aufbau das Zurrelement im oberen Abschnitt des Grundkörpers konzentrisch zum unteren Abschnitt ausgerichtet sein, so dass die Einsteckrunge zunächst durch das Zurrelement hindurchgeführt und dann in den unteren Abschnitt des Grundkörpers eingesteckt wird. Die im Bereich des Zurrelementes und im Bereich des unteren Abschnittes des Grundkörpers abgestützte Einsteckrunge erhält so einen sicheren Halt.

Mit der erfindungsgemäßen Vorrichtung lässt sich ein Ladungssicherungssystem realisieren, bei dem vorzugsweise die Einsteckrungen Führungsmittel zur Führung eines Seils, eines Gurtes, eines elastischen Bandes oder dergleichen aufweisen. Die Erfindung ermöglicht somit eine kombinierte form-und kraftschlüssige Ladungssicherung. Seile, Gurte oder Bänder können in Kombination mit den Einsteckrungen zur Ladungssicherung verwendet werden. Dadurch ist eine besonders flexible Ladungssicherung möglich. Die Führungsmittel an den Einsteckrungen können als Haken oder Ösen ausgebildet sein, durch welche die Seile, Gurte oder Bänder hindurchgeführt werden.

Vorteilhaft ist es weiterhin, wenn die erfindungsgemäße Vorrichtung für ein Ladungssicherungssystem verwendet wird. welches Trennwände aufweist, die an in die Rungentaschen einsteckbaren Einsteckrungen befestigbar oder befestigt sind. Durch solche Trennwände lassen sich zur Ladungssicherung entsprechende Bereiche auf der Ladefläche variabel abteilen.

Ein Ausführungsbeispiel der Erfindung wird im folgenden anhand der Zeichnungen näher erläutert.

### Es zeigen:

- Figur 1:: Erfindungsgemäße Ladungssicherungs-vorrichtung in Draufsicht;
- Figur 2:: Querschnittdarstellung der erfindungsgemäßen Ladungssicherungsvorrichtung mit weggeschwenktem Zurrelement;
- Figur 3;: Ladungssicherungsvorrichtung mit ausgeschwenktem Zurrelement und eingehaktem Spanngurt.

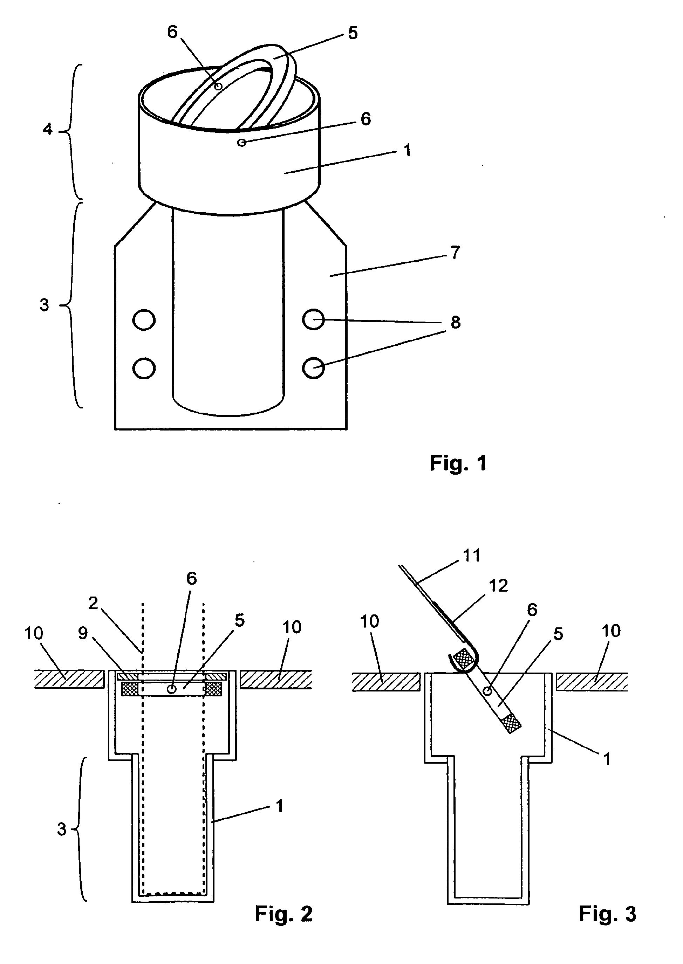

Die in den Zeichnungen dargestellte Ladungssicherungsvorrichtung besteht aus einem Grundkörper 1, der eine Rungentasche zur Aufnahme einer Einsteckrunge 2 bildet. Der Grundkörper 1 weist einen unteren Abschnitt 3 auf, der röhrenförmig ausgebildet ist. Der Innendurchmesser des unteren Abschnittes 3 entspricht im Wesentlichen dem Außendurchmesser der Einsteckrunge 2. Wie die Figur 2 zeigt, nimmt der untere Abschnitt 3 des Grundkörpers 1 die Einsteckrunge 2 in sich formschlüssig auf. Der Grundkörper 1 stützt die Einsteckrunge 2 im unteren Abschnitt 3 ab. Weiterhin weist der Grundkörper 1 einen gegenüber dem unteren Abschnitt 3 erweiterten oberen Abschnitt 4 auf, in dem der Grundkörper ein Zurrelement 5 aufnimmt. Bei dem Zurrelement 5 handelt es sich um eine kreisringförmige Zurröse, die an dem Grundkörper 1 um eine Schwenkachse drehbar gelagert ist. Die Schwenkachse wird durch an dem Grundkörper 1 und an dem Zurrelement 5 angebrachte Schwenkbolzen 6 gebildet. An dem Grundkörper 1 ist weiterhin ein Befestigungsmittel in Form einer Befestigungsplatte 7 angeordnet. Die Befestigungsplatte 7 kann zum Beispiel aus Stahl bestehen. Die Befestigungsplatte 7 ist in diesem Fall mit dem ebenfalls aus Stahl bestehenden Grundkörper 1 verschweißt. Die Befestigungsplatte weist Löcher 8 zum Verschrauben des Grundkörpers 1 mit dem Aufbau eines nicht näher dargestellten Transportmittels, beispielsweise eines LKWs, auf. Der Aufbau des LKWs weist zweckmäßigerweise ein zu den Löchern 8 korrespondierendes Lochmuster auf, so dass der Grundkörper 1 an verschiedenen Stellen an dem Aufbau des LKWs durch Verschrauben befestigt werden kann.

Die in den Zeichnungen dargestellte Ladungssicherungsvorrrichtung funktioniert wie folgt:
Zur formschlüssigen Ladungssicherung wird in die Rungentasche, die durch den Grundkörper 1 gebildet wird, eine Einsteckrunge 2 eingesteckt, wie in Figur 2 dargestellt. In diesem Fall bildet das Zurrelement 5, das in eine im Wesentlichen horizontal ausgerichtete Stellung weggeschwenkt ist, eine Führung für die Einsteckrunge 2. Der Innendurchmesser des kreisringförmigen Zurrelementes 5 entspricht im Wesentlichen dem Außendurchmesser der Einsteckrunge 2. Das Zurrelement 5 ist, wie die Figur 2 zeigt, konzentrisch zu dem unteren Abschnitt 3 des Grundkörpers 1 ausgerichtet. Somit wird die in die Rungentasche eingesteckte Einsteckrunge 2 an zwei Stellen abgestützt, nämlich im Bereich des unteren Abschnittes 3 und im Bereich des Zurrelementes 5. Wie die Figur 2 weiterhin zeigt, ist in den Grundkörper 1 eine Abdeckscheibe 9 von oben einsetzbar. Die Abdeckscheibe 9 weist eine Öffnung auf, die ebenfalls an den Außendurchmesser der Einsteckrunge 2 angepasst ist. Gleichzeitig dient die Abdeckscheibe 9 dazu, das Zurrelement 5 in der weggeschwenkten, das heißt in der horizontal ausgerichteten Stellung zu fixieren. Die Oberfläche der Abdeckscheibe 9 fluchtet im Wesentlichen mit der Ladeflächen 10.
Figur 3 zeigt die Verwendung der erfindungsgemäßen Ladungssicherungsvorrichtung zur kraftschlüssigen Ladungssicherung. Das Zurrelement 5 ist in diesem Fall ausgeschwenkt, so dass ein Band 11, an dessen Ende ein Haken 12 angeordnet ist, in das ringförmige Zurrelement 5 einhängbar ist.
Die Figuren 2 und 3 zeigen, dass der Fußbodenaufbau der Ladefläche 10 eine Öffnung zur Aufnahme des Grundkörpers 1 aufwelst. In der Öffnung ist der Grundkörper 1 in der dargestellten Weise angeordnet, so dass die Ladungssicherungsvorrichtung an der Oberseite des Fußbodenaufbaus mit der Ladefläche bündig abschließt.

## Patentansprüche

1. Vorrichtung zur Sicherung von Ladung auf der Ladefläche (10) eines Transportmittels, mit einem Grundkörper (1), der eine Rungentasche zur Aufnahme einer Einsteckrunge (2) bildet, und mit einem Zurrelement (5) zum Verzurren der Ladung mittels eines Seils (11), eines Gurtes, eines elastischen Bandes oder dergleichen,
**dadurch gekennzeichnet,**
**dass** das Zurrelement (5) an dem Grundkörper (1) um eine Schwenkachse drehbar gelagert ist.

2. Vorrichtung nach Anspruch 1, **dadurch gekennzeichnet, dass** das Zurrelement (5) als Zurröse ausgebildet ist.

3. Vorrichtung nach Anspruch 1 oder 2, **dadurch gekennzeichnet, dass** das Zurrelement (5) bei Nichtnutzung in eine im Wesentlichen horizontal ausgerichtete Stellung wegschwenkbar ist, in der es eine Führung für die Einsteckrunge (2) bildet.

4. Vorrichtung nach Anspruch 3, **dadurch gekennzeichnet, dass** das Zurrelement (5) in der weggeschwenkten Stellung bei montierter Vorrichtung mit der Ladefläche (10) des Transportmittels im Wesentlichen fluchtet.

5. Vorrichtung nach Anspruch 3 oder 4, **gekennzeichnet durch** eine in den Grundkörper (1) von oben einsetzbare Abdeckscheibe (9), die eine Öffnung für die Einsteckrunge (2) aufweist, wobei die Abdeckscheibe (9) das Zurrelement (5) in der weggeschwenkten Stellung fixiert.

6. Vorrichtung nach einem der Ansprüche 1 bis 5, **dadurch gekennzeichnet, dass** an dem Grundkörper (1) ein Befestigungsmittel (7) zur Befestigung an einem Fußbodenaufbau des Transportmittels angeordnet ist.

7. Vorrichtung nach Anspruch 6, **dadurch gekennzeichnet, dass** das Befestigungsmittel (7) Löcher (8) zum Verschrauben des Grundkörpers (1) mit dem Fußbodenaufbau des Transportmittels aufweist, wobei das Befestigungsmittel (7) die Befestigung des Grundkörpers (1) an dem Fußbodenaufbau an verschiedenen Stellen ermöglicht.

8. Vorrichtung nach einem der Ansprüche 1 bis 7, **dadurch gekennzeichnet, dass** der Grundkörper (1) einen röhrenförmigen unteren Abschnitt (3), dessen Innendurchmesser im Wesentlichen dem Außendurchmesser der Einsteckrunge (2) entspricht, und einen gegenüber dem unteren Abschnitt (3) erweiterten oberen Abschnitt (4) aufweist, in dem der Grundkörper (1) das Zurrelement (5) aufnimmt.

9. Ladungssicherungssystem mit einer Vorrichtung nach einem der Ansprüche 1 bis 8, **gekennzeichnet durch** wenigstens eine Einsteckrunge (2), die ein Führungsmittel zur Führung eines Seils (11), eines Gurtes, eines elastischen Bandes oder dergleichen an der Einsteckrunge (2) aufweist.

10. Ladungssicherungssystem nach Anspruch 9, **dadurch gekennzeichnet, dass** die Führungsmittel als Haken oder Ösen ausgebildet sind.

11. Ladungssicherungssystem mit einer Vorrichtung nach einem der Ansprüche 1 bis 8, **gekennzeichnet durch** wenigstens eine Trennwand, die an einer in die Rungentasche einsteckbaren Einsteckrunge (2) befestigbar oder befestigt ist.

12. Fußbodenaufbau der Ladefläche eines Transportmittels, aufweisend wenigstens eine Vorrichtung nach einem der Ansprüche 1 bis 8 und wenigstens eine Öffnung zur Aufnahme des Grundkörpers (1) dieser Vorrichtung.

13. Fußbodenaufbau der Ladefläche eines Transportmittels, aufweisend eine Vorrichtung nach Anspruch 7 oder 8, **dadurch gekennzeichnet, dass** der Fußbodenaufbau zur Ermöglichung der Befestigung des Grundkörpers (1) an dem Fußbodenaufbau an verschiedenen Stellen ein zu den Löchern (8) des Befestigungsmittels (7) korrespondierendes Lochmuster aufweist.

14. Fußbodenaufbau der Ladefläche eines Transportmittels, aufweisend einen Ladungssicherungssystem nach einem der Ansprüche 9 bis 11.

## Claims

1. A device for securing cargo on the load surface of a transport means, comprising a base body (1) forming a stake pocket for receiving an insertion stake (2), and a lashing element (5) for lashing the cargo by means of a cable (11), a belt, an elastic strap or the like,
**characterised in that**
the lashing element (5) is mounted to the base body (1) rotatably about a pivot axis.

2. A device according to claim 1 **characterised in that** the lashing element (5) is in the form of a lashing eye.

3. A device according to claim 1 or claim 2 **characterised in that** when not in use the lashing element (5) can be pivoted away into a substantially horizontally oriented position in which it forms a guide for the insertion stake (2).

4. A device according to claim 3 **characterised in that** in the pivoted-away position with the device fitted in place the lashing element (5) is substantially aligned with the load surface (10) of the transport means.

5. A device according to claim 3 or claim 4 **characterised by** a cover disc (9) which can be inserted from above into the base body (1) and which has an opening for the insertion stake (2), the cover disc (9) fixing the lashing element (5) in the pivoted-away position.

6. A device according to one of claims 1 to 5 **characterised in that** arranged on the base body (1) is a fixing means (7) for fixing to a floor structure of the transport means.

7. A device according to claim 6 **characterised in that** the fixing means (7) has holes (8) for screwing the base body (1) to the floor structure of the transport means, wherein the fixing means (7) permits fixing of the base body (1) to the floor structure at various locations.

8. A device according to one of claims 1 to 7 **characterised in that** the base body (1) has a tubular lower portion (3) whose inside diameter substantially corresponds to the outside diameter of the insertion stake (2) and an upper portion (4) which is enlarged in relation to the lower portion (3) and in which the base body (1) receives the lashing element (5).

9. A cargo securing system comprising a device according to one of claims 1 to 8 **characterised by** at least one insertion stake (2) having a guide means for guiding a cable (11), a belt, an elastic strap or the like at the insertion stake (2).

10. A cargo securing system according to claim 9 **characterised in that** the guide means are in the form of hooks or eyes.

11. A cargo securing system comprising a device according to one of claims 1 to 8 **characterised by** at least one separating wall which is or can be fixed to an insertion stake (2) which can be inserted into the stake pocket.

12. A floor structure of the load surface of a transport means having at least one device according to one of claims 1 to 8 and at least one opening for receiving the base body (1) of said device.

13. A floor structure of the load surface of a transport means having a device according to claim 7 or claim 8 **characterised in that** the floor structure has a pattern of holes corresponding to the holes (8) of the fixing means (7) to permit fixing of the base body (1) to the floor structure at various locations.

14. A floor structure of the load surface of a transport means having a load securing system according to one of claims 9 to 11.

## Revendications

1. Dispositif pour sécuriser un chargement sur une surface de chargement (10) d'un moyen de transport, comportant un corps de base (1), formant une poche pour recevoir un montant amovible (2), et comportant un élément d'arrimage (5) pour arrimer le chargement au moyen d'un câble (11), d'une sangle, d'une bande élastique ou tout élément similaire,
**caractérisé en ce que** l'élément d'arrimage (5) est monté sur le corps de base (1) de manière à pouvoir pivoter autour d'un axe de pivotement.

2. Dispositif selon la revendication 1, **caractérisé en ce que** l'élément d'arrimage (5) est réalisé sous la forme d'un anneau d'arrimage.

3. Dispositif selon la revendication 1 ou 2, **caractérisé en ce que** l'élément d'arrimage (5), en cas de non-utilisation, peut être amené par pivotement dans une position sensiblement horizontale, dans laquelle il forme un guidage pour le montant amovible (2).

4. Dispositif selon la revendication 3, **caractérisé en ce que** l'élément d'arrimage (5), dans la position horizontale lorsque le dispositif est monté, est sensiblement aligné avec la surface de chargement (10) du moyen de transport.

5. Dispositif selon la revendication 3 ou 4, **caractérisé par** un disque de recouvrement (9), insérable par le haut dans le corps de base (1) et muni d'une ouverture pour le montant amovible (2), ledit disque de recouvrement (9) immobilisant l'élément d'arrimage (5) dans la position horizontale.

6. Dispositif selon l'une quelconque des revendications 1 à 5, **caractérisé en ce que** sur le corps de base (1) est agencé un moyen de fixation (7) pour la fixation sur une structure de plancher du moyen de transport.

7. Dispositif selon la revendication 6, **caractérisé en ce que** le moyen de fixation (7) comporte des trous (8) pour visser le corps de base (1) avec la structure de plancher du moyen de transport, ledit moyen de fixation (7) permettant la fixation du corps de base (1) à différents emplacements sur la structure de plancher.

8. Dispositif selon l'une quelconque des revendications 1 à 7, **caractérisé en ce que** le corps de base (1) comprend une partie inférieure (3) tubulaire, dont le diamètre intérieur correspond sensiblement au diamètre extérieur du montant amovible (2), et une partie supérieure (4), qui est élargie par rapport à la partie inférieure (3) et dans laquelle le corps de base (1) reçoit l'élément d'arrimage (5).

9. Système de sécurisation d'un chargement, comportant un dispositif selon l'une quelconque des revendications 1 à 8, **caractérisé par** au moins un montant amovible (2), qui comporte un moyen de guidage pour guider un câble (11), une sangle, une bande élastique ou tout élément similaire sur le montant amovible (2).

10. Système de sécurisation d'un chargement selon la revendication 9, **caractérisé en ce que** les moyens de guidage sont réalisés sous la forme de crochets ou d'anneaux.

11. Système de sécurisation d'un chargement, comportant un dispositif selon l'une quelconque des revendications 1 à 8, **caractérisé par** au moins une cloison pouvant être fixée ou fixée sur un montant amovible (2) à enficher dans la poche.

12. Structure de plancher de la surface de chargement d'un moyen de transport, comportant au moins un dispositif selon l'une quelconque des revendications 1 à 8 et au moins une ouverture pour recevoir le corps de base (1) de ce dispositif.

13. Structure de plancher de la surface de chargement d'un moyen de transport, comportant un dispositif selon la revendication 7 ou 8, **caractérisé en ce que** la structure de plancher comporte un ensemble de perforations correspondant aux trous (8) du moyen de fixation (7) pour permettre la fixation du corps de base (1) en différents emplacements sur la structure de plancher.

14. Structure de plancher de la surface de chargement d'un moyen de transport, comportant un système de sécurisation d'un chargement selon l'une quelconque des revendications 9 à 11.
